# EUROPEAN PATENT APPLICATION

(11) **EP 4 675 366 A1**
(43) Date of publication of application: **07.01.2026**
(21) Application number: 25155486.1
(22) Date of filing: 03.02.2025
(51) Int. Cl.: G03G 15/04, G03G 15/32

(54) **EXPOSURE DEVICE AND IMAGE FORMING APPARATUS**

(30) Priority: 04.07.2024 JP 2024108410
(71) Applicant: Fujifilm Business Innovation Corp., Tokyo 107-0052 (JP)
(72) Inventor: KASUYA, Yosuke, Ebina (JP)
(74) Representative: Meissner Bolte Partnerschaft mbB

(57) **Abstract**

An exposure device includes a lens group that extends in an axial direction of a rotatable image bearing member and that has multiple lenses through which exposure light radiated toward the image bearing member is transmitted, a housing to which the lens group is attached, a substrate that is attached to the housing opposite the image bearing member with the lens group interposed therebetween and that is equipped with an electronic component, and a measurement sensor that is mounted at the substrate and that measures a distance from the image bearing member.

## Description

### Background

### (i) Technical Field

The present disclosure relates to exposure devices and image forming apparatuses.

### (ii) Related Art

An image forming apparatus according to Japanese Unexamined Patent Application Publication No. 2012-171172 has an exposure device including a light-emitting-diode (LED) head constituted of an LED array, and also has an image forming device that rotatably supports an image carrier. In the exposure device, a unit for measuring the distance from the surface of the image carrier and an electromagnet are disposed at two locations oppositely outward of the LED head in the longitudinal direction of an exposure area. The exposure device includes a controller for controlling an electric current to be applied to the electromagnet. The image forming device is provided with a magnetic-field generating member at a position facing the electromagnet of the exposure device.

### Summary

Accordingly, it is an object of the present disclosure to reduce the number of components attached to a housing while a measurement sensor is provided, as compared with a case where the measurement sensor that measures the distance from an image bearing member is directly attached to the housing.

According to a first aspect of the present disclosure, there is provided an exposure device including a lens group that extends in an axial direction of a rotatable image bearing member and that has multiple lenses through which exposure light radiated toward the image bearing member is transmitted, a housing to which the lens group is attached, a substrate that is attached to the housing opposite the image bearing member with the lens group interposed therebetween and that is equipped with an electronic component, and a measurement sensor that is mounted at the substrate and that measures a distance from the image bearing member.

According to a second aspect of the present disclosure, in the exposure device according to the first aspect, the measurement sensor may include a light emitting element and a light receiving element, and the housing may have a through-hole through which light emitted by the light emitting element passes.

According to a third aspect of the present disclosure, in the exposure device according to the second aspect, the substrate may extend in the axial direction and protrude outward from the lens group in the axial direction, the light emitting element and the light receiving element may be disposed in an area of the substrate located outward of the lens group in the axial direction, and the light emitting element and the light receiving element may be arranged in an intersecting direction intersecting the axial direction.

According to a fourth aspect of the present disclosure, in the exposure device according to the first aspect, the measurement sensor may be an eddy-current distance sensor, and the measurement sensor may be disposed in an area of the substrate where the lens group is disposed in the axial direction.

According to a fifth aspect of the present disclosure, in the exposure device according to the fourth aspect, the substrate may extend in the axial direction and face the lens group in a radial direction of the image bearing member, and the measurement sensor may include multiple measurement sensors at least disposed in areas of the substrate facing opposite-end areas of the lens group in the axial direction and in an area of the substrate facing a central area of the lens group in the axial direction.

According to a sixth aspect of the present disclosure, there is provided an image forming apparatus including an image bearing member that rotates, the exposure device according to any one of the first to fifth aspects that is disposed facing the image bearing member, and a developing device that develops an electrostatic latent image formed on the image bearing member by the exposure device into a toner image.

In the exposure device according to the first aspect of the present disclosure, the number of components attached to the housing may be reduced while the measurement sensor is provided, as compared with a case where the measurement sensor that measures the distance from the image bearing member is directly attached to the housing.

In the exposure device according to the second aspect of the present disclosure, distance measurement may be accurately performed, as compared with a case where the housing exists in a light path.

In the exposure device according to the third aspect of the present disclosure, while deterioration in the quality of an electrostatic latent image may be suppressed, an increase in size of the through-hole in the axial direction may be suppressed, as compared with a case where the light emitting element and the light receiving element are arranged in the axial direction.

In the exposure device according to the fourth aspect of the present disclosure, an increase in size of the exposure device in the axial direction may be suppressed, as compared with a case where the measurement sensor is disposed outward of the lens group in the axial direction.

In the exposure device according to the fifth aspect of the present disclosure, a change in distance caused by bending of the exposure device may be detected, as compared with a case where the measurement sensors are disposed only in areas of the substrate facing the opposite-end areas of the lens group in the axial direction.

In the image forming apparatus according to the sixth aspect of the present disclosure, an increase in components to be managed may be suppressed, as compared with a case where the image forming apparatus includes an exposure device in which the measurement sensor is directly attached to the housing of the exposure device.

### Brief Description of the Drawings

Exemplary embodiments of the present disclosure will be described in detail based on the following figures, wherein:
Fig. 1 schematically illustrates the configuration of an image forming apparatus according to a first exemplary embodiment of the present disclosure;
Fig. 2 schematically illustrates the configuration of an image forming unit included in the image forming apparatus according to the first exemplary embodiment of the present disclosure;
Fig. 3 is an exploded perspective view illustrating an exposure device according to the first exemplary embodiment of the present disclosure;
Fig. 4 is a perspective view illustrating the exposure device according to the first exemplary embodiment of the present disclosure;
Fig. 5 is a cross-sectional view illustrating the exposure device according to the first exemplary embodiment of the present disclosure;
Fig. 6 is a cross-sectional view illustrating the exposure device according to the first exemplary embodiment of the present disclosure;
Fig. 7 is a side view illustrating, for example, the exposure device and an image bearing member according to the first exemplary embodiment of the present disclosure;
Fig. 8 is an exploded perspective view illustrating an exposure device according to a second exemplary embodiment of the present disclosure; and
Fig. 9 is a cross-sectional view illustrating the exposure device according to the second exemplary embodiment of the present disclosure.

### Detailed Description

### First Exemplary Embodiment

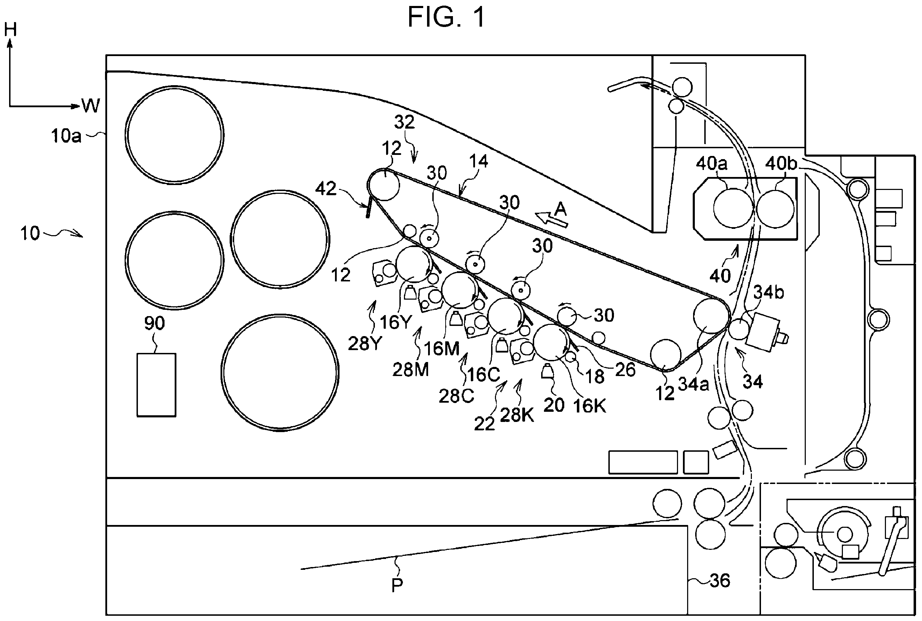

An example of an exposure device and an image forming apparatus according to a first exemplary embodiment of the present disclosure will now be described with reference to Figs. 1 to 7. An arrow H shown in each drawing denotes the vertical direction and indicates an up-down direction of the device or apparatus. An arrow W denotes the horizontal direction orthogonal to the arrow H, and indicates a width direction of the device or apparatus. An arrow D denotes the horizontal direction orthogonal to the arrow H and the arrow W, and indicates a depth direction of the device or apparatus.

### Overall Configuration of Image Forming Apparatus 10

As shown in Fig. 1, an apparatus body 10a of an image forming apparatus 10 is provided with an endless transfer belt 14 included in a transfer unit 32. The transfer belt 14 is stretched among multiple rollers 12 and is transported in the direction of the arrow A by being driven by a motor (not shown). Furthermore, the image forming apparatus 10 includes a controller 90 that controls each unit.

The image forming apparatus 10 corresponds with color-image formation and is provided with image forming units 28Y, 28M, 28C, and 28K that form toner images corresponding to four colors, namely, yellow (Y), magenta (M), cyan (C), and black (K) colors. The image forming units 28Y, 28M, 28C, and 28K are arranged in the longitudinal direction of the transfer belt 14 and are detachably supported by the apparatus body 10a.

Components provided for the respective colors will be indicated by being given alphabetical characters (Y/M/C/K) to the suffixes of the reference signs to indicate the respective colors. However, if the colors are not to be particularly differentiated from one another, the alphabetical characters at the suffixes will be omitted.

### Image Forming Units 28

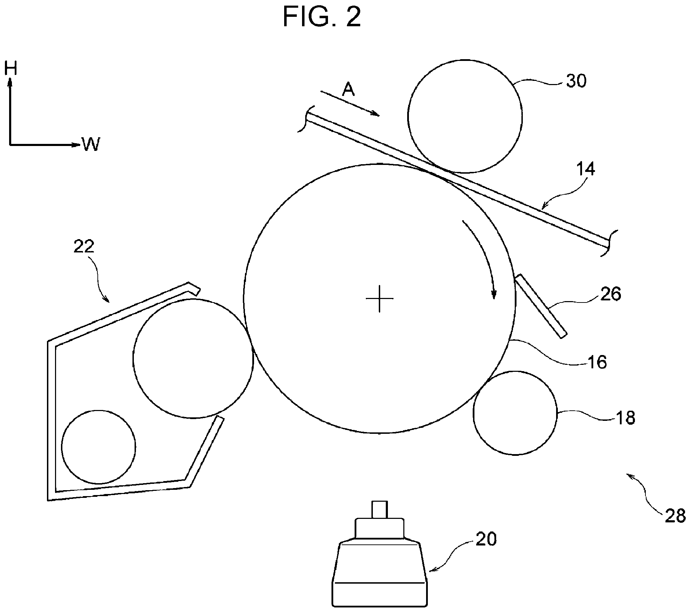

As shown in Figs. 1 and 2, each image forming unit 28 includes an image bearing member 16 that rotates clockwise. Furthermore, a charging roller 18 that electrostatically charges the surface of the image bearing member 16 uniformly to a predetermined potential is disposed on the peripheral surface of the image bearing member 16. Moreover, at the peripheral surface located downstream of the charging roller 18 in the rotational direction of the image bearing member 16, an exposure device 20 that forms an electrostatic latent image by radiating light onto the image bearing member 16 is disposed to extend in the axial direction of the image bearing member 16. The exposure device 20 will be described in detail later.

A developing device 22 is disposed on the peripheral surface located downstream of the exposure device 20 in the rotational direction of the image bearing member 16. The developing device 22 uses a toner of the corresponding color to develop the electrostatic latent image formed on the image bearing member 16, thereby forming a toner image. A cleaning blade 26 that collects the toner remaining on the image bearing member 16 is disposed on the peripheral surface located downstream of a transfer roller 30, to be described later, in the rotational direction of the image bearing member 16.

### Transfer Unit 32

As shown in Fig. 1, the transfer unit 32 includes the transfer rollers 30 disposed opposite the image bearing members 16 with the transfer belt 14 interposed therebetween. The transfer rollers 30 transfer the toner images on the image bearing members 16 onto the transfer belt 14.

Furthermore, a transfer device 34 including two opposing rollers 34a and 34b is disposed downstream of the image bearing members 16 for the respective colors in the revolving direction of the transfer belt 14. The toner images formed on the transfer belt 14 are transferred onto a sheet P that is fetched from a sheet tray 36 provided at the bottom of the image forming apparatus 10 and that is transported between the rollers 34a and 34b.

A collecting blade 42 that collects the toner remaining on the transfer belt 14 is provided downstream of the transfer device 34 in the revolving direction of the transfer belt 14.

### Fixing Device 40

As shown in Fig. 1, a fixing device 40 is disposed in a transport path of the sheet P having the toner images transferred thereon. The fixing device 40 includes a heating roller 40a and a pressing roller 40b. The sheet P is nipped and transported by the heating roller 40a and the pressing roller 40b, so that the toners of the toner images on the sheet P are pressure-bonded onto the sheet P and become fixed to the sheet P.

### Operation of Overall Configuration

In the image forming apparatus 10, an image is formed as follows.

First, each charging roller 18 shown in Fig. 1 electrostatically charges the surface of the corresponding image bearing member 16 uniformly to a negative potential. The corresponding exposure device 20 performs exposure by outputting light such that an image area on the electrostatically-charged image bearing member 16 is set to a predetermined exposure potential, whereby an electrostatic latent image is formed on the image bearing member 16. When the electrostatic latent image on the image bearing member 16 passes the developing device 22, the electrostatic latent image becomes developed into a toner image, thereby becoming visualized.

The visualized toner images are sequentially transferred onto the transfer belt 14 by an electrostatic force of the transfer rollers 30, so that color toner images are formed on the transfer belt 14.

The toner images are fed into between the rollers 34a and 34b provided in the transfer device 34. Then, the toner images are transferred onto the sheet P fetched from the sheet tray 36 and transported between the rollers 34a and 34b. Moreover, the toner images transferred on the sheet P are fixed onto the sheet P by the fixing device 40, and the sheet P is discharged outward from the apparatus body 10a.

### Relevant Components

The exposure devices 20, for example, will now be described.

### Exposure Devices 20

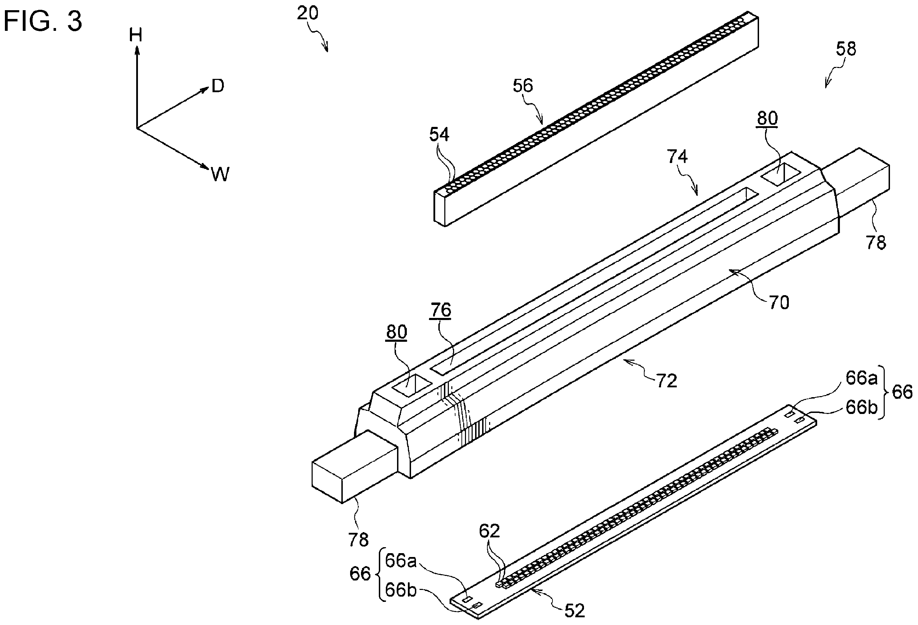

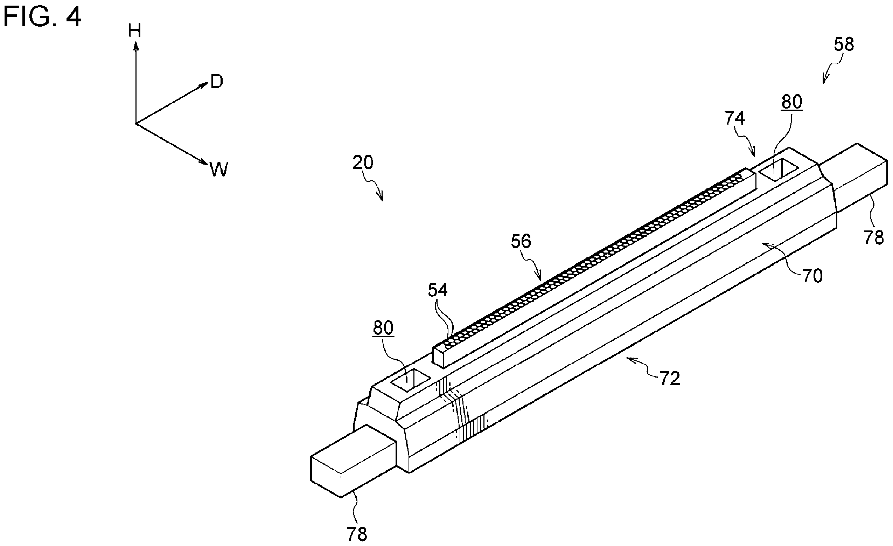

Each exposure device 20 shown in Fig. 1 is a light-emitting-diode (LED) print head having a long shape extending in the depth direction. As shown in Figs. 3 and 4, the exposure device 20 includes a substrate 52 as a printed wiring substrate having light-emitting-diode (LED) arrays 62 mounted thereon. Each LED array 62 is a light emitting element and is an example of an electronic component.

The exposure device 20 includes a lens array 56 extending in the depth direction and having multiple cylindrical rod lenses 54 that are arranged in the depth direction and through which light emitted from light emitting points of the LED arrays 62 is transmitted. The exposure device 20 also includes a housing 58 to which the substrate 52 and the lens array 56 are attached. The depth direction is an example of an axial direction. The rod lenses 54 are an example of lenses, and the lens array 56 is an example of a lens group.

### Substrate 52

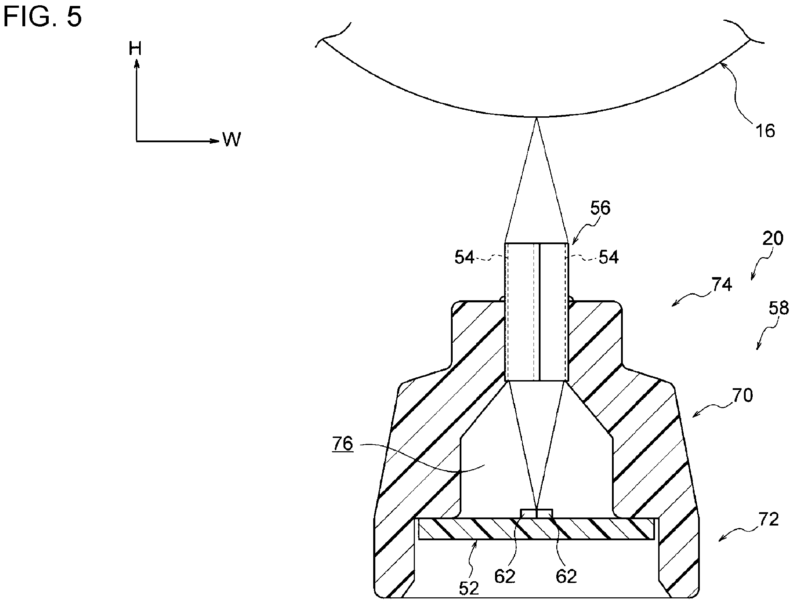

As shown in Fig. 3, the substrate 52 extends in the depth direction, has the thickness direction of the substrate 52 as the up-down direction, and is rectangular as viewed in the thickness direction. Opposite-end areas of the substrate 52 protrude outward from the lens array 56 in the depth direction. As shown in Fig. 5, the substrate 52 is disposed opposite the image bearing member 16 with the lens array 56 interposed therebetween. Moreover, the substrate 52 faces the lens array 56 in the radial direction of the image bearing member 16.

As shown in Fig. 3, multiple LED arrays 62 each having multiple linearly-provided light emitting diodes (LEDs) are mounted in a staggered pattern on the upper surface of the substrate 52. Opposite-end areas, in the depth direction, of the upper surface of the substrate 52 are equipped with measurement sensors 66. In detail, the measurement sensors 66 are mounted in areas of the substrate 52 protruding outward from the lens array 56 in the depth direction. In contrast, the other surface of the substrate 52 is equipped with an electronic component (not shown) that controls the LED arrays 62.

Each measurement sensor 66 is a so-called optical sensor and includes a light emitting element 66a and a light receiving element 66b. The light emitting element 66a and the light receiving element 66b are arranged in the width direction (i.e., traverse direction of the substrate 52). The width direction is an example of an intersecting direction.

### Lens Array 56

As shown in Figs. 3 and 4, the lens array 56 has a rectangular parallelepiped shape extending in the depth direction. The lens array 56 has the multiple rod lenses 54 that are arranged in a staggered pattern and through which the light output from the LED arrays 62 is transmitted. Accordingly, the light output from the LED arrays 62 and transmitted through the rod lenses 54 forms an image on the image bearing member 16 (see Fig. 5).

### Housing 58

The housing 58 is molded by using a resin material, such as a liquid crystal polymer, and extends in the depth direction, as shown in Figs. 3 and 4. A cross section of the housing 58 intersecting the depth direction is symmetrical in the width direction, as shown in Fig. 5.

As shown in Figs. 3 and 4, the housing 58 has a through-hole 76 extending in the depth direction and extending through the housing 58 in the up-down direction. The housing 58 also has through-holes 80 disposed at the opposite sides of the through-hole 76 in the depth direction and extending through the housing 58 in the up-down direction.

In the area having the through-hole 76, an upper end is provided with a lens fixation section 74 where the lens array 56 is fixed, as shown in Fig. 5. A lower end is provided with a substrate fixation section 72 where the substrate 52 is fixed. A body section 70 is provided between the substrate fixation section 72 and the lens fixation section 74.

Accordingly, the rod lenses 54 of the lens array 56 and the LED arrays 62 mounted on the substrate 52 face each other in the up-down direction. In other words, the rod lenses 54 of the lens array 56 and the LED arrays 62 mounted on the substrate 52 face each other in the radial direction of the image bearing member 16.

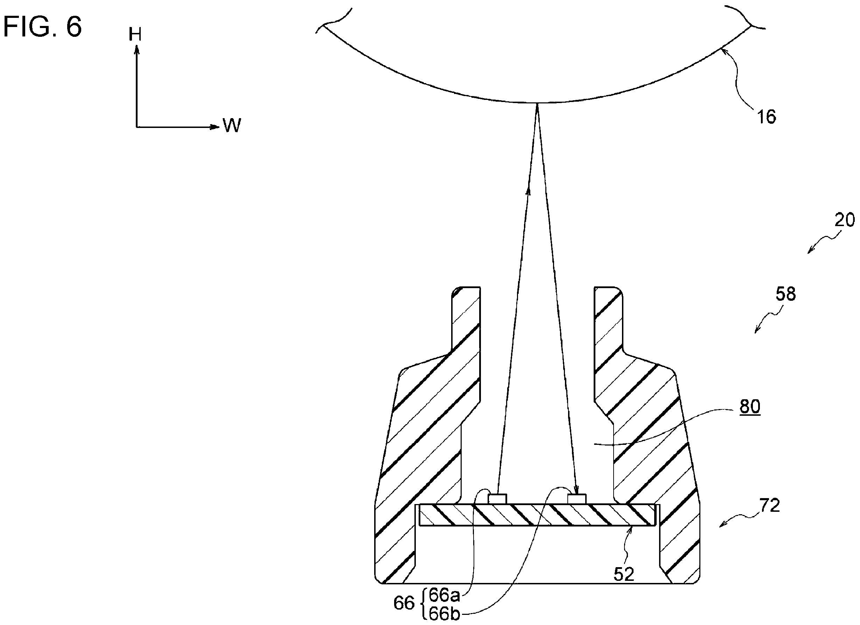

In each of the areas having the through-holes 80, a lower end is provided with the substrate fixation section 72 where the substrate 52 is fixed, as shown in Fig. 6. Specifically, the substrate fixation section 72 is connected between the lower end having the through-hole 76 and the lower ends having the through-holes 80. Accordingly, the measurement sensors 66 mounted on the substrate 52 and the image bearing member 16 face each other via the through-holes 80. Each through-hole 80 is provided to expose a path of light output from the light emitting element 66a of the corresponding measurement sensor 66 and received by the light receiving element 66b.

As shown in Figs. 3 and 4, the housing 58 includes protrusions 78 protruding in the depth direction from the body section 70 and the substrate fixation section 72. In detail, each protrusion 78 has a cross-sectionally rectangular shape extending in the depth direction.

### Other Features

A support structure for the exposure device 20 will now be described.

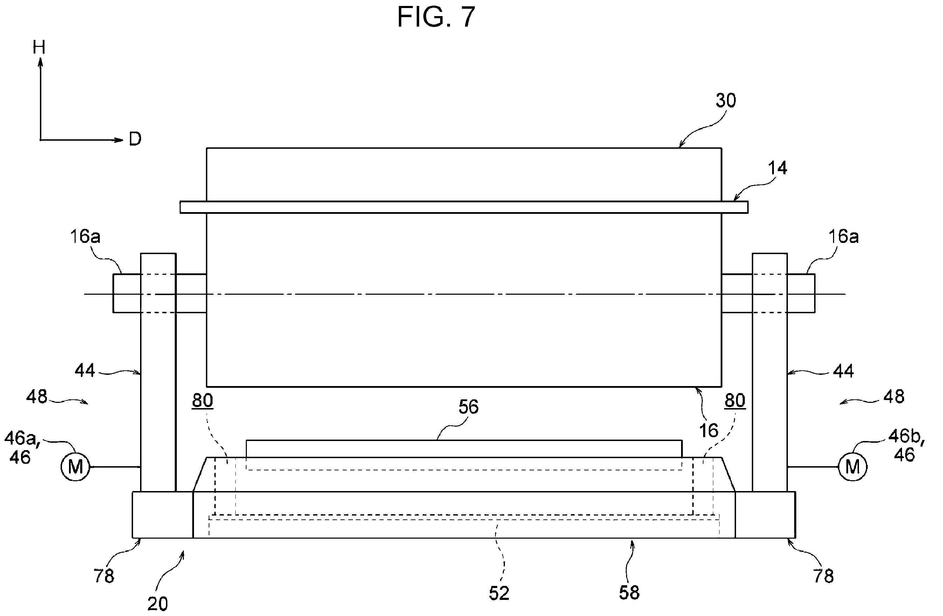

As shown in Fig. 7, the exposure device 20 is disposed to face the image bearing member 16 in the up-down direction, and is positioned relative to the image bearing member 16 in the up-down direction via a rotation shaft 16a of the image bearing member 16.

In detail, a pair of adjustment blocks 44 extending in the up-down direction are provided and are disposed at opposite ends of the image bearing member 16. The protrusions 78 of the housing 58 are attached to lower ends of the adjustment blocks 44. Moreover, upper ends of the adjustment blocks 44 rotatably support the rotation shaft 16a of the image bearing member 16.

Each adjustment block 44 includes a rack-and-pinion mechanical member. A stepping motor 46 (referred to as "motor 46" hereinafter) that applies a rotational force to the mechanism member of the adjustment block 44 is provided. For the sake of convenience, in the following description, the motor 46 at the near side in the depth direction will be referred to as a motor 46a, whereas the motor 46 at the far side in the depth direction will be referred to as a motor 46b.

In this configuration, the motors 46 rotate so that the mechanical members provided in the adjustment blocks 44 are actuated, thereby causing the exposure device 20 to move toward and away from the image bearing member 16. Specifically, when the motor 46a at the near side in the depth direction is rotated, the portion of the exposure device 20 at the near side in the depth direction moves toward and away from the image bearing member 16. In contrast, when the motor 46b at the far side in the depth direction is rotated, the portion of the exposure device 20 at the far side in the depth direction moves toward and away from the image bearing member 16.

Accordingly, an adjustment device 48 provided includes the motors 46 and the adjustment blocks 44 and adjusts the distance between the image bearing member 16 and the exposure device 20.

### Operation of Relevant Components

The operation of the exposure device 20 will now be described.

When an image output command is input from a user, the controller 90 first acquires the distance between the image bearing member 16 and the exposure device 20 measured by each measurement sensor 66 shown in Fig. 6. In detail, the measurement sensor 66 causes the light emitting element 66a to output light and causes the light receiving element 66b to receive the light reflected from the image bearing member 16, thereby measuring the distance between the image bearing member 16 and the exposure device 20. This is because the quality of an output image deteriorates when the image bearing member 16 is located close to or away from the focal position of the exposure device 20 by a permissible amount or more.

If the distance measured by the measurement sensor 66 at the far side in the depth direction and the distance measured by the measurement sensor 66 at the near side in the depth direction are within a predetermined range, the controller 90 executes image output.

In contrast, if the distance measured by either one of or each of the measurement sensors 66 is larger than the predetermined range, the controller 90 calculates a correction amount such that the image bearing member 16 moves closer toward the focal position of the exposure device 20. Moreover, based on the calculated correction amount, the controller 90 rotates the motors 46a and 46b to actuate the adjustment blocks 44. Accordingly, the controller 90 performs a correction to cause the image bearing member 16 to move closer toward the focal position of the exposure device 20. After correcting the position of the exposure device 20, the controller 90 executes image output.

### Conclusion

As described above, in the exposure device 20, the measurement sensors 66 are mounted on the substrate 52. Accordingly, the number of components attached to the housing 58 may be reduced while the measurement sensors 66 are provided, as compared with a case where the measurement sensors are directly attached to the housing.

In the exposure device 20, the housing 58 has the through-holes 80 through which the light emitted by the light emitting elements 66a passes. Accordingly, distance measurement may be accurately performed, as compared with a case where the housing exists in a light path.

In the exposure device 20, the light emitting elements 66a and the light receiving elements 66b are arranged in the width direction in the areas of the substrate 52 located outward of the lens array 56 in the depth direction. Accordingly, while deterioration in the quality of an electrostatic latent image may be suppressed, an increase in size of the through-holes 80 in the depth direction may be suppressed, as compared with a case where the light emitting elements and the light receiving elements are arranged in the width direction.

The image forming apparatus 10 includes the exposure device 20 so that an increase in components to be managed may be suppressed, as compared with a case where the image forming apparatus 10 includes an exposure device in which the measurement sensors are directly attached to the housing of the exposure device.

### Second Exemplary Embodiment

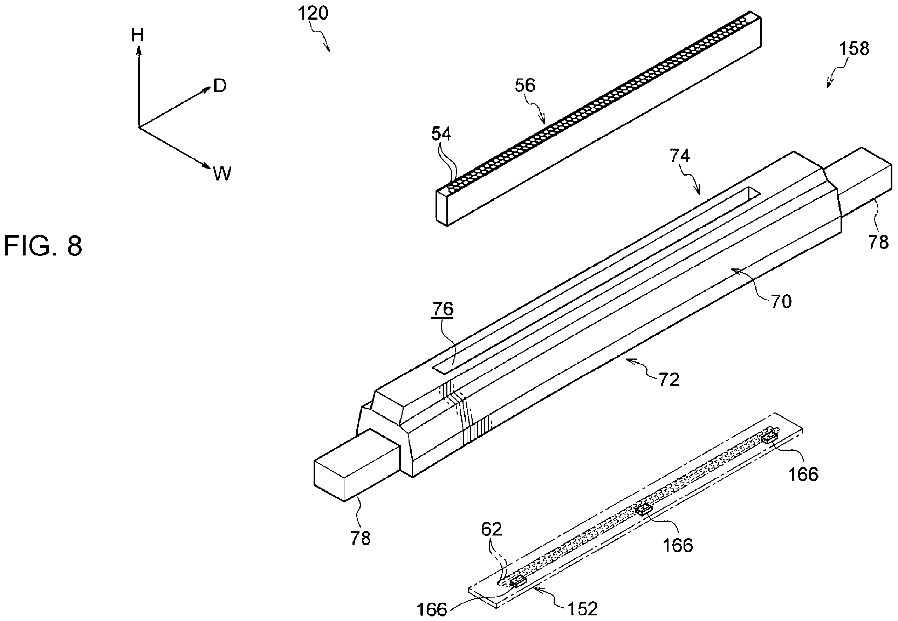

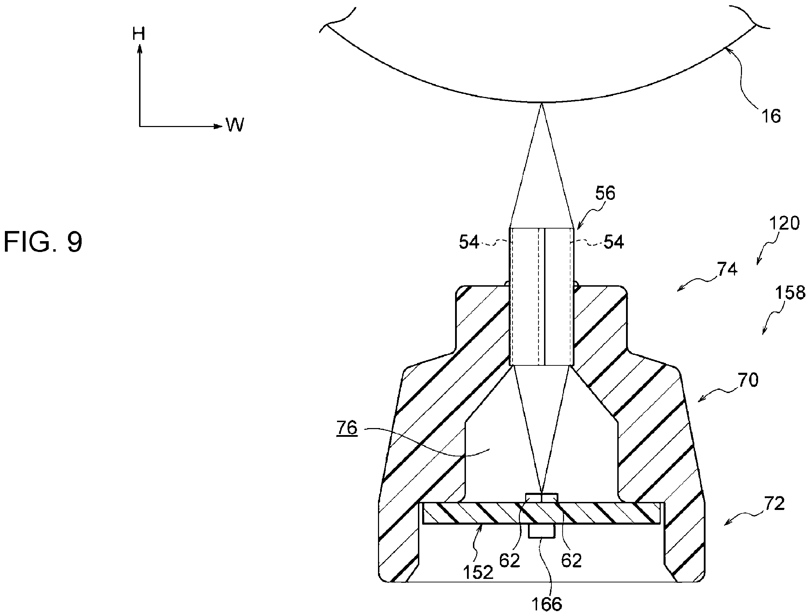

An example of an exposure device and an image forming apparatus according to a second exemplary embodiment of the present disclosure will now be described with reference to Figs. 8 and 9. In the second exemplary embodiment, sections different from those in the first exemplary embodiment will be described.

### Exposure Device 120

As shown in Fig. 8, a housing 158 of an exposure device 120 does not have through-holes at the opposite sides of the through-hole 76 in the depth direction. Moreover, the opposite sides, in the depth direction, of the LED arrays 62 mounted on a substrate 152 are not equipped with measurement sensors.

As shown in Figs. 8 and 9, measurement sensors 166 are mounted on the undersurface of the substrate 152 of the exposure device 120. In detail, the measurement sensors 166 are disposed in areas of the substrate 152 facing the opposite-end areas of the lens array 56 in the depth direction and in an area of the substrate 152 facing the central area of the lens array 56 in the depth direction. Specifically, the three measurement sensors 166 are mounted in areas of the undersurface of the substrate 152 where the lens array 56 is disposed in the depth direction.

Each measurement sensor 166 is an eddy-current distance sensor that utilizes a high-frequency magnetic field to measure distance. In detail, the high-frequency magnetic field is generated by applying a high-frequency current to a coil inside a sensor head provided in the measurement sensor 166. When there is a measurement target in this magnetic field, an electromagnetic induction effect causes an eddy current to flow around a magnetic flux passing through the target surface, thus causing the impedance of the coil inside the sensor head to change. The measurement sensor 166 measures the distance in accordance with a change in oscillation state caused by this phenomenon.

### Operation of Relevant Components

The operation of the exposure device 120 will now be described.

If the distances measured by the measurement sensors 166 disposed in the opposite-end areas in the depth direction and the distance measured by the measurement sensor 166 disposed in the central area in the depth direction are within a predetermined range, the controller 90 executes image output.

In contrast, if the distance measured by any one of or each of the measurement sensors 166 is larger than the predetermined range, the controller 90 calculates a correction amount such that the image bearing member 16 moves closer toward the focal position of the exposure device 120. Moreover, based on the calculated correction amount, the controller 90 rotates the motors 46a and 46b to actuate the adjustment blocks 44. Accordingly, the controller 90 performs a correction to cause the image bearing member 16 to move closer toward the focal position of the exposure device 120. After correcting the position of the exposure device 120, the controller 90 executes image output.

### Conclusion

As described above, in the exposure device 120, the measurement sensors 166 are mounted in the areas of the undersurface of the substrate 152 where the lens array 56 is disposed in the depth direction. Accordingly, an increase in size of the exposure device 120 in the depth direction may be suppressed, as compared with a case where the measurement sensors are disposed outward of the lens array in the depth direction.

In the exposure device 120, the measurement sensors 166 are disposed in the opposite-end areas and the central area of the substrate 152 in the depth direction. Accordingly, a change in distance caused by bending of the exposure device 120 may be detected, as compared with a case where the distances are detected at the opposite-end areas alone.

Although the exemplary embodiments of the present disclosure are described in detail with reference to specific exemplary embodiments, the exemplary embodiments of the present disclosure are not limited thereto. It is obvious to a skilled person that the present disclosure permits other kinds of exemplary embodiments within the scope of the exemplary embodiments of the present disclosure. For example, as an alternative to the first exemplary embodiment described above in which the light emitting element 66a and the light receiving element 66b are arranged in the width direction, the light emitting element and the light receiving element may be arranged in the depth direction. In this case, an effect exhibited in accordance with the arrangement in the width direction is not exhibited.

In each of the above exemplary embodiments, the measurement sensors 66 or 166 are mounted on the substrate 52 or 152 on which the LED arrays 62 are mounted. Alternatively, for example, if there is a substrate equipped with an electronic component different from the LED arrays separately from the substrate 52 or 152, the measurement sensors may be mounted on the relevant substrate.

Although not specifically described in each of the above exemplary embodiments, when the distance between the image bearing member 16 and the exposure device 20 is to be acquired by each of the measurement sensors 66 or 166, the image bearing member 16 may be rotating, or the image bearing member 16 may be stopped.

The measurement sensors 166 are mounted on the undersurface of the substrate 152 in the second exemplary embodiment described above, but may alternatively be mounted on the top surface of the substrate 152.

In the second exemplary embodiment described above, the measurement sensors 166 are mounted in the areas of the substrate 152 where the lens array 56 is disposed in the depth direction. Alternatively, the measurement sensors may be mounted in areas of the substrate located outward of the lens array 56 in the depth direction. In this case, an effect exhibited in accordance with the measurement sensors 166 being mounted in the areas of the substrate 152 where the lens array 56 is disposed in the depth direction is not exhibited.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An exposure device comprising:
   a lens group that extends in an axial direction of a rotatable image bearing member and that has a plurality of lenses through which exposure light radiated toward the image bearing member is transmitted;
   a housing to which the lens group is attached;
   a substrate that is attached to the housing opposite the image bearing member with the lens group interposed therebetween and that is equipped with an electronic component; and
   a measurement sensor that is mounted at the substrate and that measures a distance from the image bearing member.
(((2))) The exposure device according to (((1))),
   wherein the measurement sensor includes a light emitting element and a light receiving element, and
   wherein the housing has a through-hole through which light emitted by the light emitting element passes.
(((3))) The exposure device according to (((2))),
   wherein the substrate extends in the axial direction and protrudes outward from the lens group in the axial direction,
   wherein the light emitting element and the light receiving element are disposed in an area of the substrate located outward of the lens group in the axial direction, and
   wherein the light emitting element and the light receiving element are arranged in an intersecting direction intersecting the axial direction.
(((4))) The exposure device according to (((1))),
   wherein the measurement sensor is an eddy-current distance sensor, and
   wherein the measurement sensor is disposed in an area of the substrate where the lens group is disposed in the axial direction.
(((5))) The exposure device according to (((4))),
   wherein the substrate extends in the axial direction and faces the lens group in a radial direction of the image bearing member, and
   wherein the measurement sensor includes a plurality of measurement sensors at least disposed in areas of the substrate facing opposite-end areas of the lens group in the axial direction and in an area of the substrate facing a central area of the lens group in the axial direction.
(((6))) An image forming apparatus comprising;
   an image bearing member that rotates;
   the exposure device according to any one of (((1))) to (((5))) that is disposed facing the image bearing member; and
   a developing device that develops an electrostatic latent image formed on the image bearing member by the exposure device into a toner image.

In the exposure device according to (((1))), the number of components attached to the housing may be reduced while the measurement sensor is provided, as compared with a case where the measurement sensor that measures the distance from the image bearing member is directly attached to the housing.

In the exposure device according to (((2))), distance measurement may be accurately performed, as compared with a case where the housing exists in a light path.

In the exposure device according to (((3))), while deterioration in the quality of an electrostatic latent image may be suppressed, an increase in size of the through-hole in the axial direction may be suppressed, as compared with a case where the light emitting element and the light receiving element are arranged in the axial direction.

In the exposure device according to (((4))), an increase in size of the exposure device in the axial direction may be suppressed, as compared with a case where the measurement sensor is disposed outward of the lens group in the axial direction.

In the exposure device according to (((5))), a change in distance caused by bending of the exposure device may be detected, as compared with a case where the measurement sensors are disposed only in areas of the substrate facing the opposite-end areas of the lens group in the axial direction.

In the image forming apparatus according to (((6))), an increase in components to be managed may be suppressed, as compared with a case where the image forming apparatus includes an exposure device in which the measurement sensor is directly attached to the housing of the exposure device.

## Claims

1. An exposure device comprising:
a lens group that extends in an axial direction of a rotatable image bearing member and that has a plurality of lenses through which exposure light radiated toward the image bearing member is transmitted;
a housing to which the lens group is attached;
a substrate that is attached to the housing opposite the image bearing member with the lens group interposed therebetween and that is equipped with an electronic component; and
a measurement sensor that is mounted at the substrate and that measures a distance from the image bearing member.

2. The exposure device according to claim 1,
wherein the measurement sensor includes a light emitting element and a light receiving element, and
wherein the housing has a through-hole through which light emitted by the light emitting element passes.

3. The exposure device according to claim 2,
wherein the substrate extends in the axial direction and protrudes outward from the lens group in the axial direction,
wherein the light emitting element and the light receiving element are disposed in an area of the substrate located outward of the lens group in the axial direction, and
wherein the light emitting element and the light receiving element are arranged in an intersecting direction intersecting the axial direction.

4. The exposure device according to claim 1,
wherein the measurement sensor is an eddy-current distance sensor, and
wherein the measurement sensor is disposed in an area of the substrate where the lens group is disposed in the axial direction.

5. The exposure device according to claim 4,
wherein the substrate extends in the axial direction and faces the lens group in a radial direction of the image bearing member, and
wherein the measurement sensor includes a plurality of measurement sensors at least disposed in areas of the substrate facing opposite-end areas of the lens group in the axial direction and in an area of the substrate facing a central area of the lens group in the axial direction.

6. An image forming apparatus comprising;
an image bearing member that rotates;
the exposure device according to any one of claims 1 to 5 that is disposed facing the image bearing member; and
a developing device that develops an electrostatic latent image formed on the image bearing member by the exposure device into a toner image.
